# EUROPÄISCHE PATENTSCHRIFT

(11) **EP 1 903 231 B1**
(45) Veröffentlichungstag und Bekanntmachung des Hinweises auf die Patenterteilung: **09.11.2011**
(21) Anmeldenummer: 07116113.7
(22) Anmeldetag: 11.09.2007
(51) Int. Cl.: F16C 33/80, F16C 33/74, B25F 5/00, F16C 33/66

(54) **Wälzlager mit Wellenlagerdichtung**
Rolling bearing with gasket
Palier à rouleau avec joint de roulement d'arbre

(30) Priorität: 20.09.2006 DE 102006000469
(43) Veröffentlichungstag der Anmeldung: 26.03.2008
(73) Patentinhaber: HILTI Aktiengesellschaft, 9494 Schaan (LI)
(72) Erfinder: Dorner, Stefan, 87600 Kaufbeuren (DE); Hartmann, Markus, 87665 Mauerstetten (DE); Rehm, Herbert, 86932 Pürgen (DE)
(74) Vertreter: Wildi, Roland

(56) Entgegenhaltungen:
- EP-A- 1 239 173
- EP-A- 1 364 748
- WO-A-02/06006
- DE-A1- 3 916 495

## Beschreibung

Die Erfindung betrifft ein Wälzlager mit einer Wellenlagerdichtung, wobei das Wälzlager eine Welle rotierbar lagert. Diese Welle erstreckt sich durch eine Gehäuseöffnung eines Gehäuseelementes hindurch, das einen Aufnahmeraum wenigstens teilweise begrenzt, der Fett, beispielsweise in Form von Schmierfett oder Öl, enthält. Zwischen dem Fett enthaltenden Aufnahmeraum und dem Wälzlager ist dabei zu dessen Schutz vor dem Fett eine Dichtscheibe vorgesehen, die um die Welle herum zwischen dem Gehäuseelement und der Welle gehalten ist und zusammen mit einem Begrenzungselement einen Ringspalt ausbildet.

Derartige Wellenlagerdichtungen werden beispielsweise an Aufnahmeräumen für Getriebeeinheiten, beispielsweise von Handwerkzeugmaschinen, vorgesehen. Die Dichtscheibe verhindert dabei, dass das in dem betreffenden Getriebegehäuse vorgesehene Fett direkt an dem Wälzlager ansteht und durch dieses hindurch aus dem Getriebegehäuse heraus und beispielsweise in ein Motorgehäuse gelangt.

Aus der WO 02/06006 ist eine Dichtung für ein Wellenlager in Form eines Getriebetellerrades bekannt, bei der ein mit dem Tellerrad umlaufendes Förderelement Schmiermittel zurück schleudert.

Aus der EP 0 202 702 B1 ist eine Dichtung für ein Wellenlager bekannt, bei der eine Wirbelscheibe mit einer Welle drehgekoppelt ist. Diese Wirbelscheibe bildet eine sich radial nach aussen erstreckende Nabe aus, die zusammen mit einer gehäusefesten Nabe, die sich von einer Gehäuseöffnung radial nach innen erstreckt, einen Ringspalt ausbildet. Dieser Ringspalt weist im Querschnitt eine labyrinthartige Form auf.

Aus US 5,876,126 ist eine Wellenlagerdichtung bekannt, bei der an einem gehäusefesten Aussenring eines Wälzlagers eine Dichtscheibe gehalten ist. Diese bildet zusammen mit einer Welle und einem auf die Welle aufgepressten Innenring des Wälzlagers einen labyrinthartigen Ringspalt.

Nachteilig an den bekannten Wellenlagerdichtungen ist, dass trotz des labyrinthartigen Ringspaltes, insbesondere bei einer vertikalen Ausrichtung der Welle Fett zum Wälzlager gelangt und durch dieses hindurch aus dem Aufnahmeraum austritt.

Derartige Wellenlager sind somit nicht für Handwerkzeugmaschinen geeignet, die, beispielsweise bei Deckenarbeiten, zeitweise vertikal nach oben ausgerichtet betrieben oder abgestellt werden, bei denen aber kein Fett durch das Wellenlager austreten darf.

Der vorliegenden Erfindung liegt die Aufgabe zugrunde, eine für Handwerkzeugmaschinen geeignete Wellenlagerdichtung bereit zu stellen, die die genannten Nachteile vermeidet und das Wellenlager besser von Fett freihält.

Erfindungsgemäss wird die Aufgabe dadurch gelöst, dass in die Dichtscheibe Belüftungsausnehmungen eingelassen sind, die den Ringspalt mit dem Aufnahmeraum verbinden. Hierdurch ist es möglich, das Fett, das in Folge einer vertikalen Ausrichtung des Wälzlagers beim Abstellen beziehungsweise im Betrieb des betreffenden Gerätes in den Spalt eingetreten ist beziehungsweise eintritt, wieder aus dem Spalt heraus zu befördern. Dabei werden dynamische Effekte genutzt, die durch die relative Drehbewegung der Dichtscheibe, die den Ringspalt zu einer ersten Seite begrenzt, gegenüber der weiteren Begrenzung entstehen, die den Ringspalt zu einer zweiten Seite begrenzt. Hierzu kann die Dichtscheibe mit der Welle und das Begrenzungselement mit dem Gehäuseelement fest verbunden sein oder umgekehrt. Die Belüftungsausnehmungen bewirken dabei eine Belüftung des Ringspaltes. Diese Belüftung verhindert im Betrieb den Aufbau eines Unterdruckes im Ringspalt, der das Fett im Ringspalt hält oder sogar in diesen einsaugt.

In einer besonders bevorzugten Ausführungsform ist die Dichtscheibe durch eine mit der Welle drehgekoppelten Schleuderscheibe gebildet und das Begrenzungselement gehäusefest ausgebildet. Hierdurch wird die Dichtscheibe im Betrieb mit der Welle mit bewegt und das an der Dichtscheibe anstehende Fett beschleunigt. Hierdurch kann, insbesondere bei geeigneter Ausbildung der Dichtscheibe, das Fett besonders effektiv aus dem Ringspalt befördert werden.

Vorteilhafterweise ist der Ringspalt zwischen einer radial äusseren Rotationsfläche der Dichtscheibe und dem Begrenzungselement ausgebildet, wodurch das an der Dichtscheibe anstehende Fett im Betrieb maximal beschleunigt wird. Auf diese Weise kann der Transport des Fettes aus dem Ringspalt weiter optimiert werden.

Bevorzugterweise münden die Belüftungsausnehmungen in die Rotationsfläche der Dichtscheibe, was im Betrieb eine besonders gute Belüftung des Ringspaltes und somit eine ungehinderte Beförderung des Fettes aus dem Ringspalt gewährleistet.

Vorteilhafterweise sind die Belüftungsausnehmungen dabei gleichartig geformt und in gleichen Winkelabständen angeordnet. Hierdurch erzielt man über den Umfang der Dichtscheibe einen gleichmässigen Abtransport des Fettes.

Bevorzugterweise sind wenigstens drei Belüftungsausnehmungen vorgesehen, wodurch sich eine besonders hohe Förderleistung der Dichtscheibe bezüglich des Fettes in dem Ringspalt erzielen lässt.

Vorteilhafterweise erstrecken sich die Belüftungsausnehmungen dabei von einer raumseitigen Stirnfläche zu einer lagerseitigen Stirnfläche der Schleuderscheibe. Auf diese Weise erfolgt die Belüftung des Ringspaltes über die gesamte Breite der Rotationsfläche. Zudem kann hierdurch zusätzlich ein durch die vom Aufnahmeraum abgewandte lagerseitige Stirnfläche der Dichtscheibe begrenzter Bereich des Ringspaltes belüftet werden.

Die Belüftungsausnehmungen liegen radial nach Innen an einem virtuellen Zylinder an, dessen Durchmesser kleiner ist als der Aussendurchmesser eines mit der Welle drehgekoppelten Innenringes des Wälzlagers. Auf diese Weise kann die dem Aufnahmeraum zugewandte Seite des Wälzlagers im Bereich zwischen dem wellenseitigen Innenring und einem gehäusefesten Aussenring vollständig belüftet werden. In diesem Bereich, über den bei unzureichender Dichtung der Austritt aus dem Aufnahmeraum erfolgt, kann auf diese Weise die Bildung eines Unterdruckes vermieden werden. Hierdurch ist bei geeigneter Ausbildung der Dichtscheibe auch in diesem Bereich ein im Wesentlichen vollständiger Abtransport des hier anstehenden Fettes möglich.

Bevorzugterweise erstrecken sich die Belüftungsausnehmungen über 70 bis 95% des Umfanges. Hierbei bilden jeweils zwei der Belüftungsausnehmungen zwischen sich ein Beschleunigungselement aus. Mit dieser propellerartigen Ausformung der Dichtscheibe kann eine besonders hohe Förderleistung hinsichtlich des Fettes im Dichtspalt erzielt werden.

Dabei ist es günstig, wenn die Beschleunigungselemente jeweils eine einer Drehrichtung der Dichtscheibe zugewandte Seitenfläche aufweisen, die gegenüber der Achse geneigt ist, was die Förderleistung weiter erhöht.

Ferner ist es von Vorteil, wenn die Beschleunigungselemente jeweils alternativ oder zusätzlich an der Rotationsfläche gegenüber der Achse A geneigt sind. Auf diese Weise bildet die Schleuderscheibe im Betrieb einen konischen Rotationskörper an dessen Umfang ein weiter verbesserter Fetttransport stattfindet.

Die Erfindung wird nachstehend anhand eines Ausführungsbeispieles näher erläutert. Es zeigen:
Fig. 1 eine teilweise geschnittene Ansicht einer erfindungsgemässen Wellenlagerdichtung,
Fig. 2 eine Ansicht einer vereinzelten Dichtscheibe der Wellenlagerdichtung nach Fig. 1
Fig. 3 eine Ansicht der Dichtscheibe nach Fig. 2. in Richtung III,
Fig. 4 eine Ansicht einer alternativen Dichtscheibe,
Fig. 5 eine Ansicht der alternativen Dichtscheibe nach Fig. 4 in Richtung V,
Fig. 6 eine Ansicht einer weiteren alternativen Dichtscheibe und
Fig. 7 eine Ansicht der weiteren alternativen Dichtscheibe nach Fig. 6 in Richtung VII.

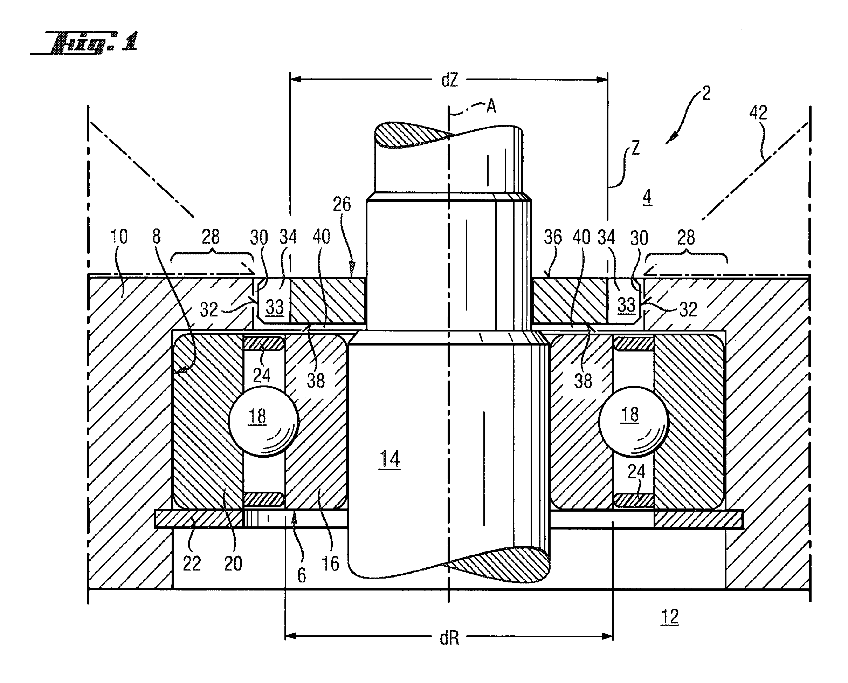

Fig. 1 zeigt eine Wellenlagerdichtung 2 an einem Fett enthaltenden Aufnahmeraum 4 eines nicht näher dargestellten Getriebegehäuses einer Handwerkzeugmaschine, beispielsweise in Form eines Bohr-, Bohrhammer oder Schraubgerätes. Die Wellenlagerdichtung 2 ist dabei an einem Wälzlager 6 vorgesehen, das an einer Gehäuseöffnung 8 eines wandförmigen Gehäuseelementes 10 gehalten ist. Dabei trennt das Gehäuseelement 10 den Aufnahmeraum 4 von einem Aussenraum 12 eines nicht näher dargestellten Motorgehäuses.

Das Wälzlager 6 dient zur um eine Achse A herum rotierbaren Lagerung einer Welle 14, die durch die Gehäuseöffnung 8 hindurch vom Aussenraum 12 in den Aufnahmeraum 4 ragt. Hierzu weist das Wälzlager 6 einen Innenring 16 auf, der beispielsweise mittels Presssitz, drehfest mit der Welle 14 verbunden ist. Der Innenring 16 ist über kugelförmige Wälzkörper 18 gegenüber einem Aussenring 20 des Wälzlagers 6 verdrehbar. Der Aussenring 20 ist drehfest in dem Gehäuseelement 10 gehalten und durch einen Sprengring 22 axial gesichert. Dabei sind zwischen dem Innenring 16 und dem Aussenring 20 ringförmige Dichtungselemente 24 vorgesehen.

Ferner ist auf der Welle 14 eine Dichtscheibe 26 in Form einer Schleuderscheibe vorgesehen, die beispielsweise über einen Presssitz mit der Welle 14 drehgekoppelt ist. Diese ist bezüglich der Achse A auf axialer Höhe eines Begrenzungselementes 28 gehalten, das durch einen in die Gehäuseöffnung 8 radial nach Innen ragenden Kragenabschnitt des Gehäuseelementes 10 gebildet ist. Hierbei bilden eine durch die radial äusseren Flächen der Dichtscheibe 26 definierte umfängliche Rotationsfläche 32 und das Begrenzungselement 28 einen Ringspalt 30 aus.

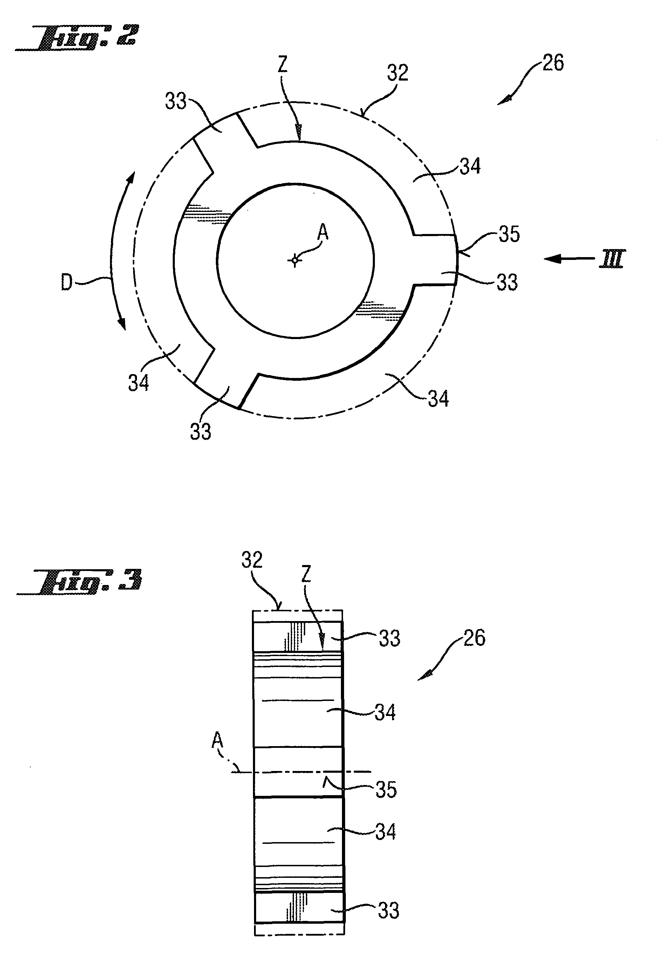

Wie aus den Fig. 2 und 3 zu entnehmen ist, weist die Dichtscheibe 26 drei Beschleunigungselemente 33 auf, die durch drei Belüftungsausnehmungen 34 voneinander getrennt sind. Die Belüftungsausnehmungen 34 erstrecken sich dabei über jeweils mehr als 90° der Rotationsfläche 32. Die Beschleunigungselemente 33 bilden radial äussere Umfangsflächen 35 aus, die die Rotationsfläche 32 definieren.

Alternativ hierzu können die Belüftungsausnehmungen 34 aber auch durch eine Mehrzahl von schmaleren Nuten gebildet sein, die am Umfang in die Dichtscheibe 26 eingelassen sind (nicht dargestellt). In jedem Fall ist die Rotationsfläche 32 durch die radial äussersten Flächen der Dichtscheibe 26 gebildet, die bei Rotation D der Drehscheibe 26 eine äussere zylindrische Fläche des entstehenden Rotationskörpers bilden.

Die Belüftungsausnehmungen 34 und somit auch die Beschleunigungselemente 33 erstrecken sich, wie aus Fig. 3 zu entnehmen ist, über die gesamte Breite der Dichtscheibe 26 von einer raumseitigen Stirnfläche 36, die dem Aufnahmeraum 4 zugewandt ist, zu einer lagerseitigen Stirnfläche 38, die dem Wälzlager 6 zugewandt ist.

Radial nach Innen erstrecken sich die Belüftungsausnehmungen 34, wie aus Fig. 1 zu entnehmen ist, bis zu einem gemeinsamen virtuellen Zylinder Z, der einen Durchmesser dZ aufweist. Dieser Durchmesser dZ ist dabei kleiner als ein Aussendurchmesser dR des Innenringes 16.

Wenn die betreffende Werkzeugmaschine im Betrieb oder beim Abstellen bei stehender Welle 14 so ausgerichtet ist, dass diese gemäss Fig. 1 vertikal ausgerichtet ist, kann Fett aus dem Aufnahmeraum 4 in den Ringspalt 30 zwischen der Dichtscheibe 26 und dem Begrenzungselement 28 und über diesen in einen Zwischenraum 40 zwischen der Dichtscheibe 26 und dem Wälzlager 6 fliessen. Hierbei steht das Fett direkt an den Dichtungselementen 24 an.

Sobald die Welle 14 in Rotation um die Achse A herum versetzt wird, wird das Fett im Ringspalt 30 und im Zwischenraum 40 durch die Dichtscheibe 26 beschleunigt und aus dem Ringspalt heraus transportiert. Die Belüftungsausnehmungen 34, die den Aufnahmeraum 4 mit dem Ringspalt 30 und dem Zwischenraum 40 verbinden, gewährleisten hierbei, dass sowohl der Ringspalt 30 als auch wenigstens der Bereich des Zwischenraumes 40, der sich über die Dichtungselemente 24 erstreckt, ausreichend belüftet sind. Auf diese Weise kann hier der Aufbau eines Unterdruckes vermieden und eine nahezu vollständige Entfernung des an Dichtungselementen anstehenden Fettes gewährleistet werden. Dabei wird ein Fettkegel 42 erzeugt, der im Betrieb permanent am Ringspalt 30 ansteht, aber nicht in diesen eindringen kann, solange die Dichtscheibe rotiert.

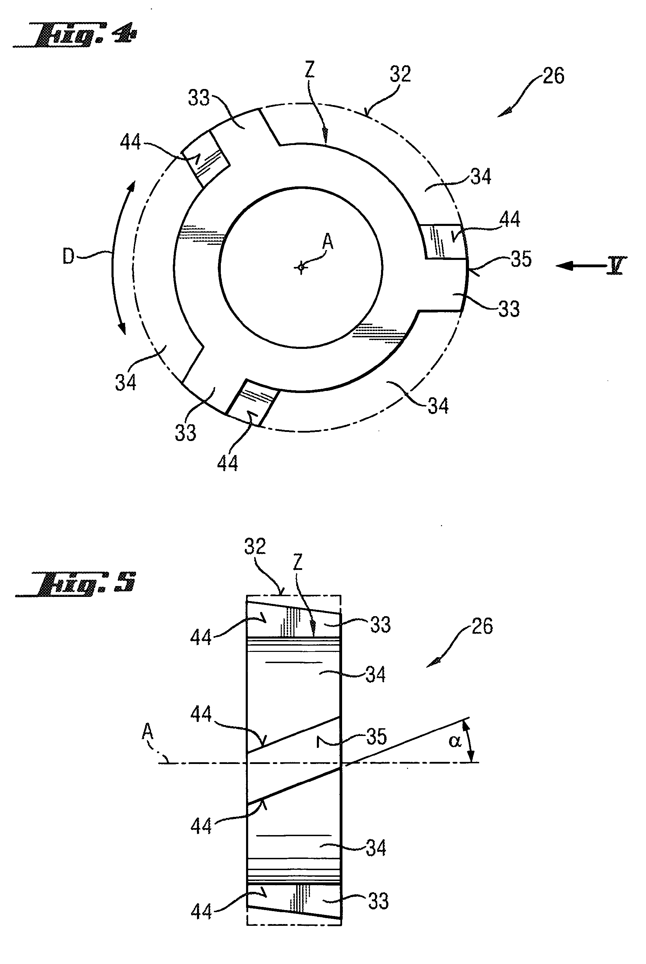

Die Fig. 4 bis 7 zeigen zwei alternative Ausführungsformen der Dichtscheibe 26, wobei Elemente mit gleicher Funktion die entsprechenden Bezugszeichen wie in der Ausführungsform nach Fig. 1 bis 3 aufweisen.

Bei der Ausführungsform nach Fig. 4 und 5 weisen die Beschleunigungselemente 33 an beiden in Drehrichtung D gerichteten Seitenfläche 44 eine Neigung (α) gegenüber der Achse A auf.

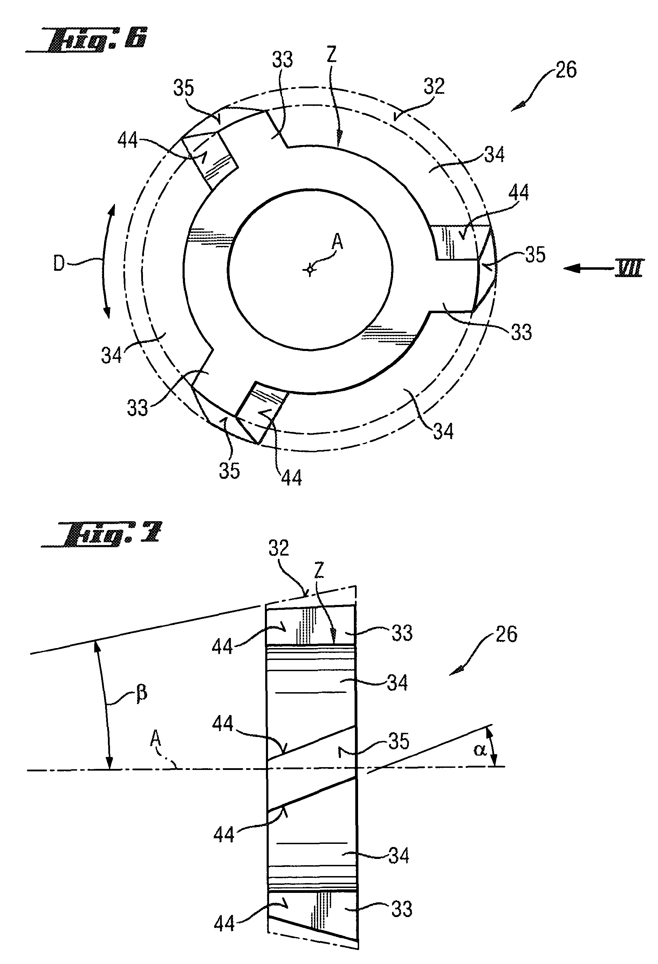

Bei der Ausführungsform nach Fig. 6 und 7 ist zusätzlich die radial äussere Umfangsfläche 35 der Beschleunigungselemente 33 jeweils gegenüber der Achse A geneigt (β), so dass die Dichtscheibe 26 bei Rotation in Drehrichtung D einen konischen Rotationskörper bildet, wie durch die strichpunktierten Linien dargestellt.

## Patentansprüche

1. Wälzlager mit einer Wellenlagerdichtung, wobei das Wälzlager eine Welle (14) rotierbar lagert, die sich durch eine Gehäuseöffnung (8) eines Gehäuseelementes (10) hindurch erstreckt, das einen Fett enthaltenden Aufnahmeraum (4) wenigstens teilweise begrenzt,
wobei zwischen dem Fett enthaltenden Aufnahmeraum (4) und dem Wälzlager (6) eine Dichtscheibe (26) vorgesehen ist, die zwischen dem Gehäuseelement (10) und der Welle (14) gehalten ist und zusammen mit einem Begrenzungselement (28) einen Ringspalt (30) ausbildet,
wobei in die Dichtscheibe (26) Belüftungsausnehmungen (34) eingelassen sind, die den Ringspalt (30) mit dem Aufnahmeraum (4) verbinden,
**dadurch gekennzeichnet, dass** sich die Belüftungsausnehmungen (34) radial nach Innen bis zu einem virtuellen Zylinder (Z) erstrecken, dessen Durchmesser (dZ) kleiner ist als der Aussendurchmesser (dR) eines mit der Welle (14) drehgekoppelten Innenringes (16) des Wälzlagers (6).

2. Wälzlager nach Anspruch 1, **dadurch gekennzeichnet, dass** die Dichtscheibe (26) durch eine mit der Welle (14) drehgekoppelte Schleuderscheibe gebildet und das Begrenzungselement (28) gehäusefest ausgebildet ist.

3. Wälzlager nach Anspruch 2, **dadurch gekennzeichnet, dass** der Ringspalt (30) zwischen einer radial äusseren Rotationsfläche (32) der Dichtscheibe (26) und dem Begrenzungselement (28) ausgebildet ist.

4. Wälzlager nach Anspruch 3, **dadurch gekennzeichnet, dass** die Belüftungsausnehmungen (34) in die Rotationsfläche (32) der Dichtscheibe (26) münden.

5. Wälzlager nach einem der Ansprüche 1 bis 4, **dadurch gekennzeichnet, dass** die Belüftungsausnehmungen (34) gleichartig geformt und in gleichen Winkelabständen (a) angeordnet sind.

6. Wälzlager nach einem der Ansprüche 1 bis 5, **dadurch gekennzeichnet, dass** mindestens drei Belüftungsausnehmungen (34) vorgesehen sind.

7. Wälzlager nach Anspruch 1 bis 6, **dadurch gekennzeichnet, dass** sich die Belüftungsausnehmungen (34) von einer raumseitigen Stirnfläche (36) zu einer lagerseitigen Stirnfläche (38) der Dichtscheibe (26) erstrecken.

8. Wälzlager nach einem der Ansprüche 1 bis 7, **dadurch gekennzeichnet, dass** sich die Belüftungsausnehmungen (34) über 70 bis 95% des Umfangs erstrecken, wobei jeweils zwei der Belüftungsausnehmungen (34) zwischen sich ein Beschleunigungselement (33) ausbilden.

9. Wälzlager nach Anspruch 8, **dadurch gekennzeichnet, dass** das Beschleunigungselement (33) eine einer Drehrichtung D zugewandte Seitenfläche (44) aufweist, die gegenüber der Achse A geneigt (α) ist.

10. Wälzlager nach Anspruch 8 oder 9, **dadurch gekennzeichnet, dass** das Beschleunigungselement an der Rotationsfläche (32) gegenüber der Achse A geneigt (β) ist.

## Claims

1. Rolling bearing with a shaft bearing seal, the rolling bearing being mounted rotatably on a shaft (14) which extends through a housing opening (8) of a housing element (10) which at least partially delimits a receiving chamber (4) containing grease,
a sealing disc (26), which is retained between the housing element (10) and the shaft (14) and which forms together with a delimiting element (28) an annular gap (30), being provided between the receiving chamber (4) containing grease and the rolling bearing (6),
and ventilation recesses (34) which connect the annular gap (30) to the receiving chamber (4) being formed in the sealing disc (26),
**characterised in that** the ventilation recesses (34) extend radially inwards as far as a virtual cylinder (Z), the diameter (dZ) of which is smaller than the external diameter (dR) of an inner ring (16) of the rolling bearing (6) which is rotationally coupled to the shaft (14).

2. Rolling bearing according to Claim 1, **characterised in that** the sealing disc (26) is formed by a centrifuge disc rotationally coupled to the shaft (14), and the delimiting element (28) is configured to be fixed to the housing.

3. Rolling bearing according to Claim 2, **characterised in that** the annular gap (30) is formed between a radially outer rotating surface (32) of the sealing disc (26) and the delimiting element (28).

4. Rolling bearing according to Claim 3, **characterised in that** the ventilation recesses (34) open into the rotating surface (32) of the sealing disc (26).

5. Rolling bearing according to any one of Claims 1 to 4, **characterised in that** the ventilation recesses (34) are formed identically and are arranged with equal angular spacing (a).

6. Rolling bearing according to any one of Claims 1 to 5, **characterised in that** at least three ventilation recesses (34) are provided.

7. Rolling bearing as claimed in the Claims 1 to 6, **characterised in that** the ventilation recesses (34) extend from a face (36) of the sealing disc (26) on the chamber side to a face (38) of the sealing disc (26) on the bearing side.

8. Rolling bearing according to any one of Claims 1 to 7, **characterised in that** the ventilation recesses (34) extend over 70% to 95% of the circumference, each two of the ventilation recesses (34) forming an acceleration element (33) between them.

9. Rolling bearing according to Claim 8, **characterised in that** the acceleration element (33) has a side face (44) which faces towards a direction of rotation D and is inclined (α) with respect to the axis A.

10. Rolling bearing according to Claim 8 or 9, **characterised in that** the acceleration element is inclined (β) on the rotating surface (32) with respect to the axis A.

## Revendications

1. Palier à roulement comportant un joint de palier à roulement, le palier à roulement supportant un arbre (14) en rotation qui traverse une ouverture de carter (8) d'un élément de carter (10) qui délimite au moins partiellement un espace de réception (4) contenant de la graisse,
dans lequel un disque d'étanchéité (26) est prévu entre l'espace de réception (4) contenant de la graisse et le palier à roulement (6), lequel disque est maintenu entre l'élément de carter (10) et l'arbre (14) et forme un espace annulaire (30) conjointement avec un élément de délimitation (28),
dans lequel des évidements d'aération (34) reliant l'espace annulaire (30) et l'espace de réception (4) pénètrent dans le disque d'étanchéité (26),
**caractérisé en ce que** les évidements d'aération (34) s'étendent radialement vers l'intérieur jusqu'à un cylindre virtuel (Z) dont le diamètre (dZ) est plus petit que le diamètre extérieur (dR) d'une bague intérieure (16) du palier à roulement (6) couplée en rotation à l'arbre (14).

2. Palier à roulement selon la revendication 1, **caractérisé en ce que** le disque d'étanchéité (26) est formé par un disque centrifuge couplé en rotation à l'arbre (14) et l'élément de délimitation (28) est configuré fixe par rapport au carter.

3. Palier à roulement selon la revendication 2, **caractérisé en ce que** l'espace annulaire (30) est formé entre une surface de rotation radialement extérieure (32) du disque d'étanchéité (26) et l'élément de délimitation (28).

4. Palier à roulement selon la revendication 3, **caractérisé en ce que** les évidements d'aération (34) débouchent dans la surface de rotation (32) du disque d'étanchéité (26).

5. Palier à roulement selon l'une quelconque des revendications 1 à 4, **caractérisé en ce que** les évidements d'aération (34) sont formés de manière identique et sont agencés à des distances angulaires (a) égales.

6. Palier à roulement selon l'une quelconque des revendications 1 à 5, **caractérisé en ce qu'**au moins trois évidements d'aération (34) sont prévus.

7. Palier à roulement selon les revendications 1 à 6, **caractérisé en ce que** les évidements d'aération (34) s'étendent à partir d'une surface d'extrémité côté espace de réception (36) jusqu'à une surface d'extrémité côté palier (38) du disque d'étanchéité (26).

8. Palier à roulement selon l'une quelconque des revendications 1 à 7, **caractérisé en ce que** les évidements d'aération (34) s'étendent sur 70 à 95 % de la circonférence, dans lequel chaque deux évidements d'aération (34) adjacents forment un élément d'accélération (33).

9. Palier à roulement selon la revendication 8, **caractérisé en ce que** l'élément d'accélération (33) comporte une surface latérale (44) dirigée dans un sens de rotation D, laquelle surface latérale est inclinée d'un angle (α) par rapport à l'axe A.

10. Palier à roulement selon la revendication 8 ou 9, **caractérisé en ce que** l'élément d'accélération est incliné sur la surface de rotation (32) d'un angle (β) par rapport à l'axe A.
